# EUROPEAN PATENT APPLICATION

(11) **EP 4 773 009 A1**
(43) Date of publication of application: **08.07.2026**
(21) Application number: 25227455.0
(22) Date of filing: 29.12.2025
(51) Int. Cl.: G06F 9/54

(54) **METHOD FOR SOFTWARE DEFINED VEHICLE (SDV) APPLICATION PROGRAMMING INTERFACE (API)**

(30) Priority: 02.01.2025 CN 202510006211
(71) Applicant: NXP USA, Inc., Austin, TX 78735 (US)
(72) Inventor: YANG, Lang, 5656 AG Eindhoven (NL); LI, Xingyi, 5656 AG Eindhoven (NL)
(74) Representative: Schwarzweller, Thomas

(57) **Abstract**

A method for implementing software defined vehicle, SDV, application programming interfaces, APIs, using an automotive open system architecture, AUTOSAR, classic platform, CP, is described. The method includes distributing SDV APIs on at least one client-server, C-S, interface located between: a SDV sensor software component, SWC, a SDV central compute unit, CCU, SWC, and a SDV actuator SWC. The method also includes developing an API-Data Distribution Service, DDS, transformer and mapping, by the API-DDS, the at least one C-S interface to DDS topics.

## Description

### Technical Field

The technical field relates to a method for implementing software defined vehicle (SDV) vehicle application programming interfaces (APIs). In particular, the technical field relates to a method based on the automotive open system architecture (AUTOSAR) classic platform (CP).

### Background

The automotive open system architecture (AUTOSAR) is a global development partnership and organizations founded in 2003 by automotive manufacturers, suppliers and other companies from the electronics, semiconductor and software industries AUTOSAR's purpose is to develop and establish an open and standardized software architecture for automotive electronic control units.

It is known that a Software Defined Vehicle (SDV) is a current trend in vehicle electronic architecture. However, SDV implementation by original equipment manufacturers (OEMs) mostly focuses on advanced driving assistance (ADAS) and infotainment, both of which have Linux environments. Currently, there are no mature implementation approaches for real-time processors or microcontroller units (MCUs). The inventors have appreciated that, without improved real-time processors or MCUs, SDV is only a partial enablement and far away from the concept of defining the whole vehicle by software. The inventors have also recognized and appreciated that known OEM attempts to develop SDV on MCUs still rely on traditional signal-based communication, and that this reliance does not de-couple physical signals from services and, thus, violates the SDV principles. The inventors have also recognized and appreciated that known OEMs are evaluating software (even non-automotive software) to attempt to meet the flexibility of SDV implementation. However, the software quality/performance of such software fails to meet automotive requirements in terms of latency, functional safety, and eco-system. Here, 'latency' encompasses the time software execution takes, which ideally shall be short enough (for automotive systems); functional safety encompasses sets of standards to handle function failure that safety-related software shall comply with, for example, steering, braking, etc.; and eco-system (sometimes referred to as 'tool chain') relates to software development efforts (i.e., a mature tool chain requires less development effort to achieve the same quality).

It is also known that global organizations are standardizing vehicle application programming interfaces (APIs) to meet plug 'n' play requirements. However, the inventors have also recognized and appreciated that these global organizations have not shown how different platforms (such as between AutoSAR Classic Platform (CP) and AutoSAR Adaptive Platform (AP)) comply with these APIs.

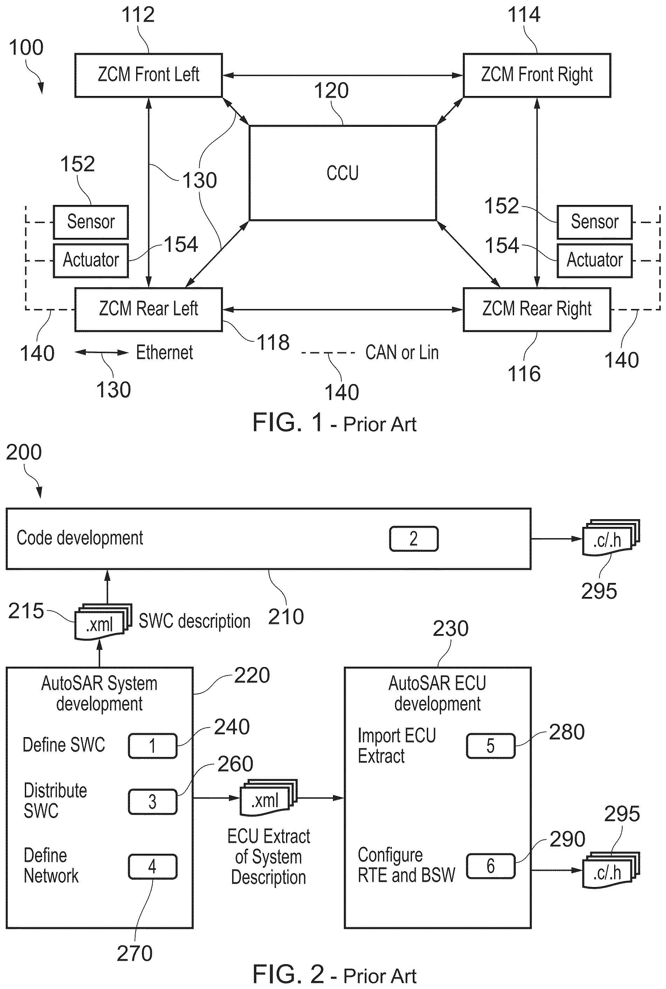

FIG. 1 illustrates a simplified known Sensor-Compute-Actuator hardware architecture 100 for a SDV. The simplified known hardware architecture 100 includes a Central Compute Unit (CCU) 120 connected to multiple Zone Control Modules (ZCM) 112, 114, 116, 118, where each ZCM 112, 114, 116, 118 is connected to its neighbouring ZCM. Usually, the CCU 120 integrates a vehicle computer, which is a high-performance real-time processor and it executes heavy application software for the SDV. During application runs, the CCU 120 requests services from ZCMs 112, 114, 116, 118 to receive input or generate output. One or more of the ZCMs 112, 114, 116, 118 is/are connected to sensors 152 and actuators 154 via a Controller Area Network (CAN) or Local Interconnect Network (LIN) 140, which are two widely adopted protocols that facilitate real-time data exchange among electronic components in vehicles. Connections between ZCMs 112, 114, 116, 118, and between ZCMs 112, 114, 116, 118 and the CCU 120 use ethernet 130. This hardware architecture suits the SDV idea with consideration of costs and feasibility. The SDV aims to reform vehicle electronic architecture in both hardware and software. The features that a SDV can provide are determined by software, whilst the hardware architecture remains the same across multiple vehicles. This requires great flexibility of software development and allocation among electronic control units (ECUs) at the vehicle level. The commonly used solution to ensure flexibility is to leverage Service-Oriented Architecture (SOA), instead of the traditional signal-based buses. SOA provides a client-server protocol in order to isolate services from actual hardware.

FIG. 2 illustrates an overview of known AutoSAR CP development processes 200 and exchange formats. AutoSAR development generally consists of three parts. A first part is AutoSAR System development 220, which includes defining SoftWare Components (SWCs) 240 including interface definition and connection, which may also include developing code manually or automatically to implement the SWCs; distributing SWCs 260 to the responsible ECUs, and defining networks 270 (including Ethernet, CAN, and LIN networks at this stage). The SWC 240 provides an input of .xml files 215 to the second part, namely the code development 210, which outputs .c/.h files 295. A third part includes AutoSAR ECU 230 development, which includes importing the ECU extract 280 in xml format from the system development, where the ECU extract 280 contains definitions and requirements the ECU needs to know; and configure Real Time Environment (RTE) and Basic SoftWare (BSW) 290 of the AutoSAR ECU 230, which completes the lower-level configuration and generates code. The AutoSAR ECU 230 then outputs .c/.h files 295 that can be used to compile into binaries for the AUTOSAR microcontroller.

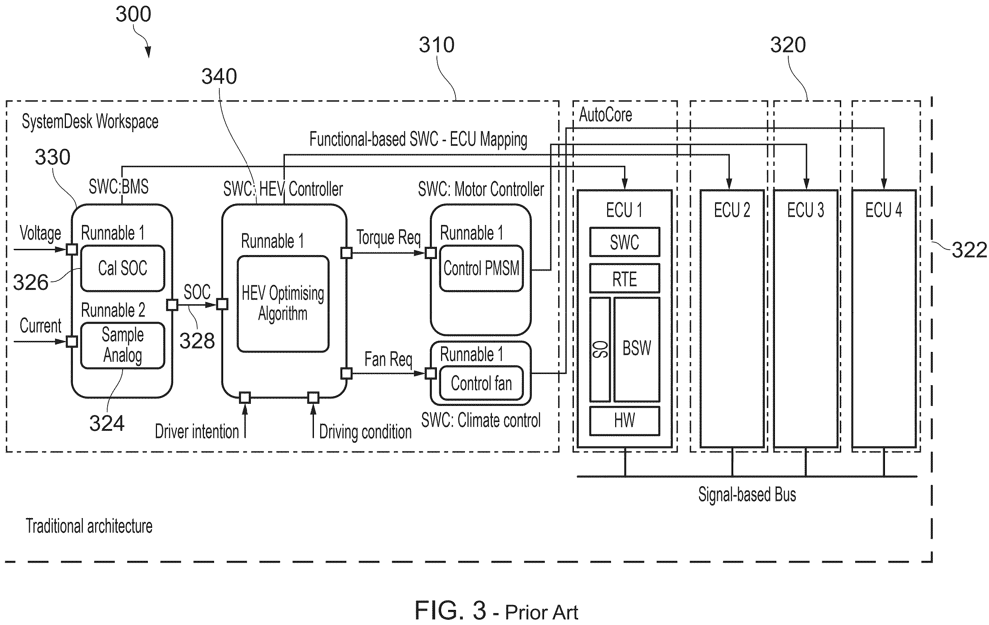

FIG. 3 illustrates one example of a known traditional SWC architecture 300 based on functions that will be allocated to a single ECU. The known traditional software architecture 300 includes a known dSPACE^{™} SWC tool, termed SystemDesk Workspace 310, connected to a known Electribit^{™} BSW tool, termed 'AutoCore' 320, that includes multiple ECUs 322. In the known traditional SWC architecture 300, one SWC is responsible for the whole function that includes sensor, compute, and actuator functionality. Then, in the illustrated known traditional SWC architecture 300, this one SWC will be mapped to one ECU 322 to implement, for example, SWC 330 for the Battery Management System (BMS) includes a sample analog 324 (equivalent to a sensor function), a Calculation of state of charge (CalSoC 326) (Compute), and a state of charge (SOC) output (328) (equivalent to an Actuator/output), where the SWC-ECU 322 mapping principle is CCU-ZCM based, as illustrated in FIG. 1. All heavy algorithms 340 are run on CCU (such as CCU 120 in FIG. 1) while ZCM nodes (such as ZCM nodes 112, 114, 116, 118 in FIG. 1) manage input-outputs (I/O) directly. Vehicle APIs are abstracted interfaces for a service within the vehicle. When a client ECU needs a service provided by another ECU, it calls the vehicle API to request the service. In case vehicle APIs have been unified by organizations, ECU plug 'n' play is possible.

Accordingly, the inventors have recognized and appreciated a need for an improved method for implementing software defined vehicle (SDV) vehicle application programming interfaces (APIs) using the automotive open system architecture (AUTOSAR) toolchain (particularly CP) to provide an unified interface and software quality fully compliant with automotive use cases.

### Summary

Examples described herein provide a method for implementing software defined vehicle (SDV) vehicle application programming interfaces (APIs) using the automotive open system architecture (AUTOSAR) toolchain (particularly CP), as described in the accompanying claims. Specific example embodiments are set forth in the dependent claims. These and other aspects will be apparent from and elucidated with reference to the embodiments described hereinafter.

### Brief description of the drawings

Further details, aspects and example embodiments will be described, by way of example only, with reference to the drawings. In the drawings, like reference numbers are used to identify like or functionally similar elements. Elements in the figures are illustrated for simplicity and clarity and have not necessarily been drawn to scale.
FIG. 1 illustrates a simplified known hardware architecture for a Software Defined Vehicle (SDV).
FIG. 2 illustrates an overview of known AutoSAR CP development processes and exchange formats.
FIG. 3 illustrates one example of a known traditional software architecture.
FIG. 4 illustrates one example of a Software Defined Vehicle (SDV) architecture, according to some examples.
FIG. 5 illustrates one example process for building a Software Defined Vehicle (SDV) in a context of AutoSAR CP, according to some examples.
FIG. 6 illustrates one example of implementing and distributing vehicle APIs between SoftWare Components (SWCs), according to some examples.
FIG. 7 illustrates a further example of implementing and distributing vehicle APIs between SWCs, according to some examples.
FIG. 8 illustrates one example of designing the vehicle API-Data Distribution Service (DDS) transformer to translate C-S interface to DDS topics, according to some examples.
FIG. 9 illustrates one example of a message sequence chart for designing the vehicle API-DDS transformer to translate C-S interface to DDS topics, say related to FIG. 8, according to some examples.

### Detailed description

Examples described herein provide a method for implementing software defined vehicle (SDV) vehicle application programming interfaces (APIs) using a system architecture and associated software to implement the SDV concept on real-time processors, such as MCUs, using the automotive open system architecture (AUTOSAR) classic platform (CP). In this manner, examples described herein enable developers to use a Client-Server (C-S) SoftWare Component (SWC) API from the AUTOSAR Classic Platform that will be mapped to a Data Distribution Service (DDS), so that their software can benefit from the advanced Service-Oriented Architecture (SOA). This is in contrast to known techniques that employ DDS in AUTOSAR CP that uses a Sender-Receiver AUTOSAR API, and which therefore forces a limited signal-based software design. In examples described herein, the implementation of the Client-Server model uses an AutoSAR C-S interface but not in the traditional way, as examples described herein extend a C-S interface to vehicle APIs. In some examples, the SOA methodology is employed for a bridge between the C-S interface in SWCs and Ethernet frames, and is used to realize services via the middleware, DDS Complex Device Driver (CDD) to transform service request/response into a topic subscribe/publish, instead of the traditional signal-based buses. The method for implementing SDV APIs may also make AutoSAR CP nodes connect with other platforms, say via DDS topics.

A traditional SDV architecture uses SWC distribution to electronic control units (ECUs), and these are based on functions, such as a SWC battery measurement system (BMS) that is designed to be executed by one SWC and assigned to the sole BMS ECU. Thus, the known architecture uses communication between ECUs that are signal based messages such as CAN or Ethernet frames. In contrast, in examples described herein, the SDV SWC architecture is strictly based on a Sensor-Compute-Actuator architecture, where one SWC is responsible for one of: a sensor, or a compute, or an actuator, of the function. Ordinarily, to implement this respective function, a designer would usually need several SWCs mapping to several ECUs.

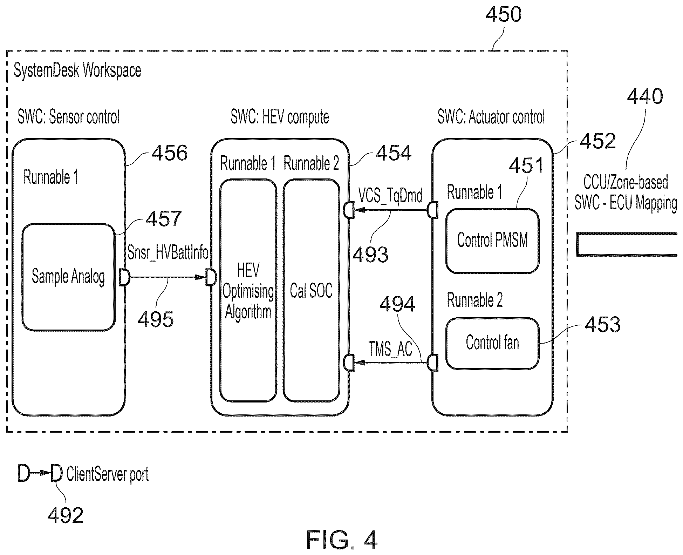

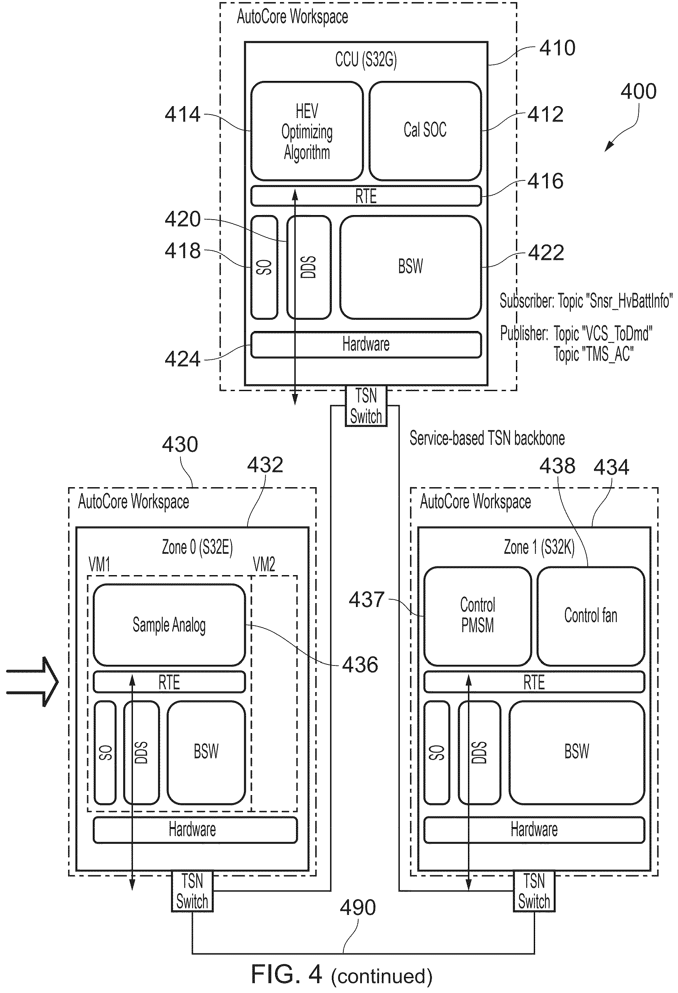

Referring now to FIG. 4, one example of designing a hybrid electric vehicle control in a Software Defined Vehicle (SDV) architecture 400 is illustrated using AutoCore Workspace, according to some examples. In this example, a Hybrid Electrical Vehicle (HEV) is selected as the SDV and one HEV algorithm (of many that can be used) is for the HEV algorithm to control a motor and a fan according to the input battery information. The SDV architecture 400 includes a CCU 410 and two zone control modules (SCMs), Zone0 432 and Zone1 434. The CCU 410 includes an HEV optimsing algorithm 414 and a Cal SOC 412, a RTE 416, an OS 418, a DDS 420, a BSW 422 and associated hardware 424. The ZCMs 432, 434 include comparable hardware/software/firmware circuits, as shown, with Zone0 432 being arranged to execute sensor-based signals and Zone1 434 being arranged to execute actuator-based signals.

In contrast to the traditional architecture design, the SDV architecture 400 according to examples described herein employs a SWC design 450 that is strictly based on a SWC Sensor 456 - SWC (HEV) Compute 454 - SWC Actuator 452 design. The connections between SWC Sensor 456, SWC (HEV) Compute 454, and SWC Actuator 452 are Client-Server C-S ports 492, which carry vehicle APIs. In this example, SWC Sensor 456 executes a sample analog input 457 and outputs sensed input battery information (in a form of a 'Snsr_HvBattInfo' command) 495 to the SWC (HEV) Compute 454. In this example, SWC Actuator 452 executes a control signal 451 for a Permanent Magnet Synchronous Motor (PMSM) and a fan-based control signal 453 and outputs, in this vehicle example, a Vehicle Control Service_Torque Demand ('VCS_TqDmd') command 493 and a Thermal Management System_Air Conditioner ('TMS_AC') command 494 to the SWC (HEV) Compute 454. Although this example is based on torque and thermal management commands, it is envisaged that these are just two examples from hundreds of possible examples for information and commands that can be supported in the examples described herein. Based on the commands received (e.g., 493, 494, 495) the SWC (HEV) Compute 454 calculates a State of Charge (SOC) of the battery and accordingly executes a HEV optimizing algorithm to control actuator 452 that controls PMSM.

Notably, in this example, the SWCs will then be mapped 440 to ECUs. Compared with the approach adopted in FIG 1, the example described in FIG. 4 provides software details within CCU 410 and ZCMs (Zone0 432, Zone1 434). The CCU 410 executes the Cal SOC 412 and the HEV optimising (compute) algorithm 414 mapped (440) from SWC HEV compute 454, Zone0 432 executes mapped sensor software 436 mapped (440) from sample analog input 457, and Zone1 434 executes mapped (440) actuator software 437, 438 from PMSM control signal 451 and fan-based control signal 453. At a lower layer, software within the DDS of each CCU and ZCM, is a bridge between SWC C-S client and the physical ethernet. Also, in this example, a Time Sensitive Network (TSN) 490 may be used to guarantee low latency on the ethernet, consistent with an AutoSAR CP approach that is known for 'real time' applications (i.e., low latency).

With this approach, a Client-Server (C-S) interface that is modified to implement a Vehicle API is adopted to perform the service request and response between SDV SWCs. In some examples, this interface is designed in the AutoSAR system development. Furthermore, a link between the C-S interface and an ethernet on the SDV is adopted using a Data Distribution Service (DDS). In some examples, C-S communications are implemented on a real network in order to maintain the service concepts. In some examples, the DDS approach adopted utilizes a pair of subscriber requests and results and publisher requests and results for each topic to map the C-S interface to DDS topics.

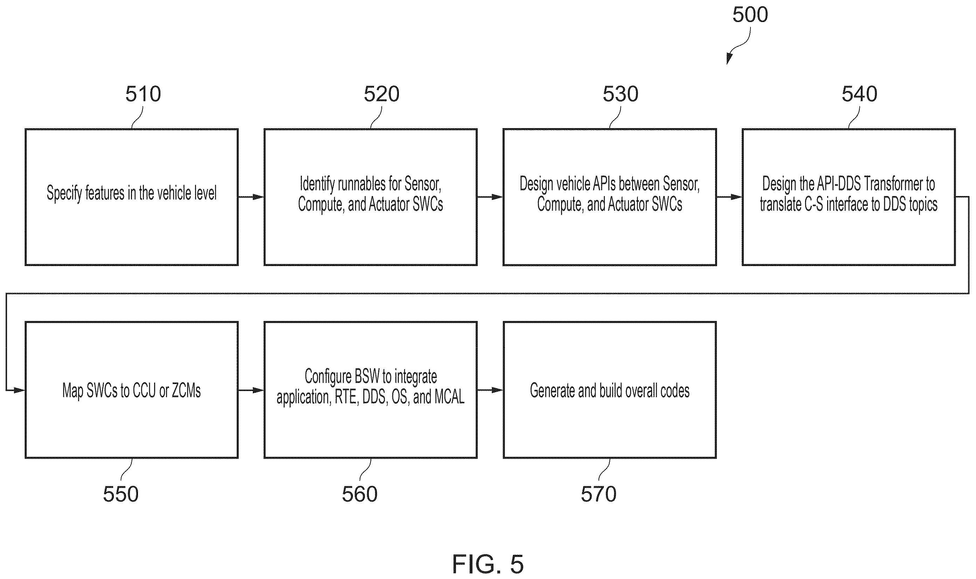

Referring now to FIG. 5, one example complete flowchart 500 for building a Software Defined Vehicle (SDV), in a context of AutoSAR CP, is illustrated according to some examples. It is envisaged that this flowchart 500 may be applied to a plurality or all CP nodes in the SDV, regardless of whether the SDV is CCU- based or ZCM-based. The flowchart 500 focuses on two distinct design aspects:
(i) a design of the vehicle APIs between Sensor, Compute, and Actuator SWCs, e.g., implement Vehicle API on the C-S interfaces between SDV SWCs; and
(ii) a design of the API-DDS Transformer in order to translate/map the client-server (C-S) interface to DDS topics, e.g., extending the known use of C-S interfaces are known to perform the service to further format the service to function as a Vehicle API, e.g. mapping between C-S interfaces (carrying Vehicle APIs) to DDS topics.

Thus, in the example flowchart 500, the approach starts at 510 with specifying features in the vehicle level, and, at 520, identifying 'runnables' for sensor, compute (CCU) and actuator SWCs, where 'runnables' is a technical term used in AutoSAR and encompasses a sequence of operations provided by the component that can be started by the AUTOSAR run-time environment.

In accordance with examples herein described, new operations are performed at 530 and 540. Here, at 530, designing vehicle APIs is performed for the sensor, compute (CCU) and actuator SWCs. At 540, designing of the API-DDS Transformer in order to translate/map the client-server (C-S) interface to DDS topics, and, at 550, mapping SWCs to CCU or ZCMs. At 560, the flowchart includes configuring a BSW to integrate SWC applications, RTE, DDS, OS and MicroController Abstract Layer (MCAL). At 570, the flowchart includes generating and building the overall software codes.

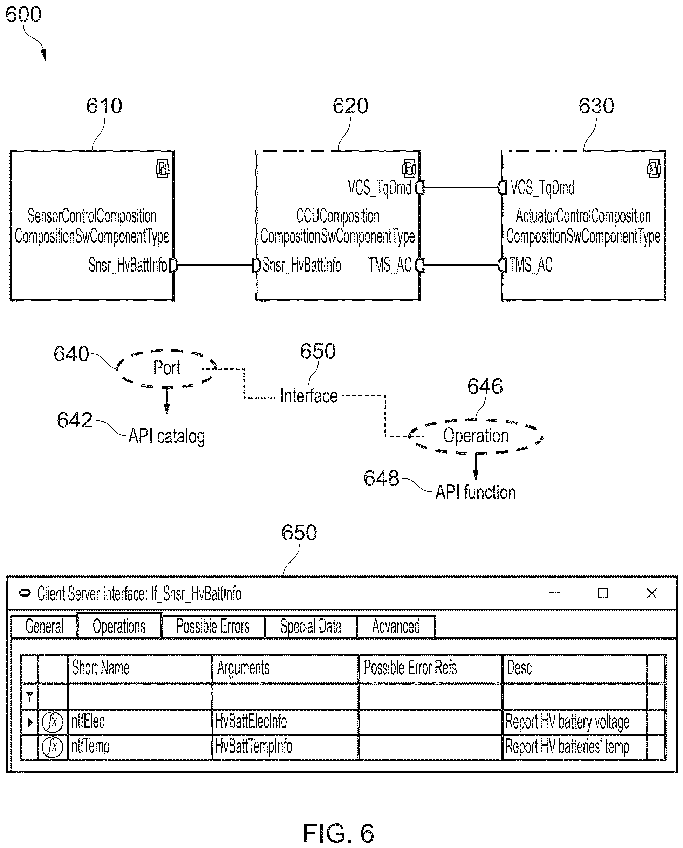

FIG. 6 illustrates a first envisaged example 600 of implementing and distributing vehicle APIs between SWCs, according to some examples. The SWC design is strictly based on a SWC Sensor 610 - SWC Compute 620 - SWC Actuator 630 design. The connections between SWC Sensor 610, SWC Compute 620, and SWC Actuator 630 are Client-Server C-S ports, which carry vehicle APIs. In this example, SWC Sensor 610 executes a sample analog input and outputs sensed input battery information (in a form of a 'Snsr_HvBattInfo' command) to the SWC Compute 620. In this example, SWC Actuator 630 executes two control signals and outputs a 'VCS_TqDmd' command and a 'TMS_AC' command to the SWC Compute 620.

Vehicle APIs shall be defined to apply to different platforms, for example especially commonly used Linux environments (in ADAS and Infotainment). The inventors have recognized and appreciated that this known approach brings challenges to the AutoSAR CP toolchain, whose standards don't accomodate such considerations. Vehicle APIs are usually implemented in Linux^{™}, QNX^{™}, Android^{™}, etc., which are flexible and provide numerous software packages. However, AutoSAR CP is almost static and used in small ECUs. Examples herein described are arranged to utilise an AutoSAR CP C-S interface in such a way to comply with Vehicle APIs. A first approach to utilise an AutoSAR CP client-server (C-S) interface, such as C-S interface 650, in such a way to comply with Vehicle APIs may be to match a Port 640 to an API catalog 642 and an 646 Operation to an API function 648 in order to generate standardized Rte_Call_p_o APIs in an RTE generator. A second approach to utilise an AutoSAR CP client-server (C-S) interface, such as C-S interface 650, in such a way to comply with Vehicle APIs may be to not map any signals to C-S interfaces, such as C-S interface 650, which are generally considered unsuitable but may be deemed suitable enough to support SDV scenarios.

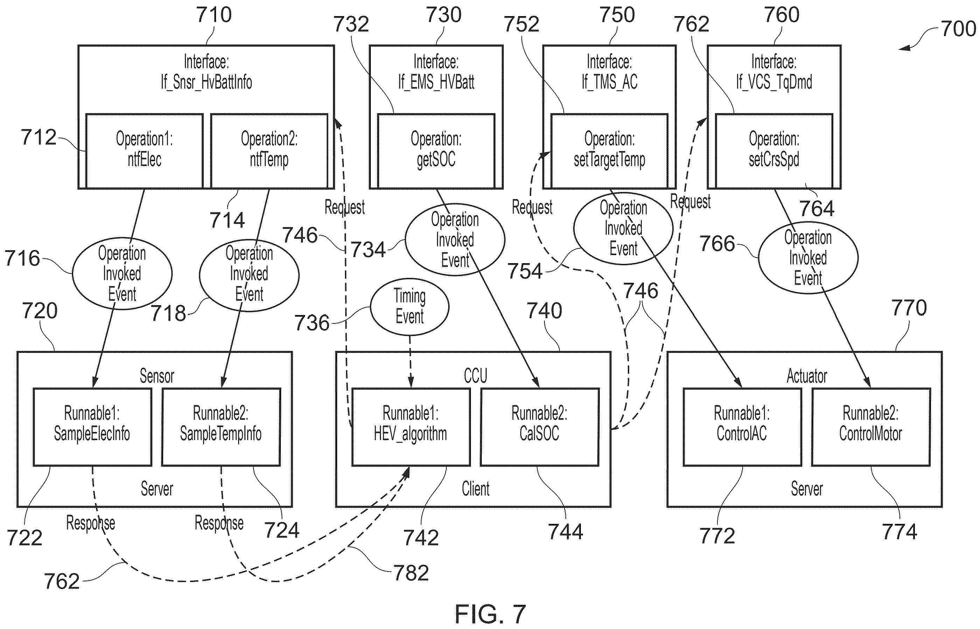

Referring now to FIG. 7, a second envisaged example 700 of implementing and distributing vehicle APIs between SWCs is illustrated, with the terms being defined in AutoSAR standards, as appreciated by a skilled artisan. Again, this example focuses on a design of vehicle APIs between Sensor SWC 720, Central Compute Unit (CCU) SWC 740, and Actuator 770 SWCs, where Sensor SWC 720 and Actuator 770 SWC act as servers for CCU SWC 740 acting as a client. After defining vehicle APIs, examples described herein associate the APIs to Runnables. The triggering methods of the Runnables indicate how these APIs will be called in the code. As illustrated, multiple APIs 710, 730, 750 and 760 are shown, with a number of the APIs able to receive requests from the CCU 740. Each of the APIs runs at least one operation 712, 714, 732, 752, 762. In this example, two kinds of approaches are adopted for the Central Compute Unit (CCU)-Zone Control Modules (ZCM) software defined vehicle (SDV). A first approach to trigger a runnable software algorithm may use a timing event, such as timing event 736 that triggers a Runnable HEV_algorithm 742 in CCU 740. Here, a basic software (BSW) operating system (OS) schedules software algorithms in response to the Timing Event 736, for example to periodically execute calculating tasks. This is how heavy software-only code may be scheduled. A second approach to trigger a runnable software algorithm may use an Operation Invoked Event 716, 718, 734, 754, 766, each of which triggers a respective input-output (I/O) related service provided by a respective sensor 720, the CCU 740 or actuator 770 by the predefined SWC configurations. Only following calling via a request 746, using the Operation Invoked Event, shall the service be provided, which significantly reduces the ethernet loading. In some examples, the flexibility of Operation Invoked Event can also dynamically combine different services in the runtime to meet different driving conditions. Responses corresponding to Request 746 are illustrated by dotted response paths 762, 782.

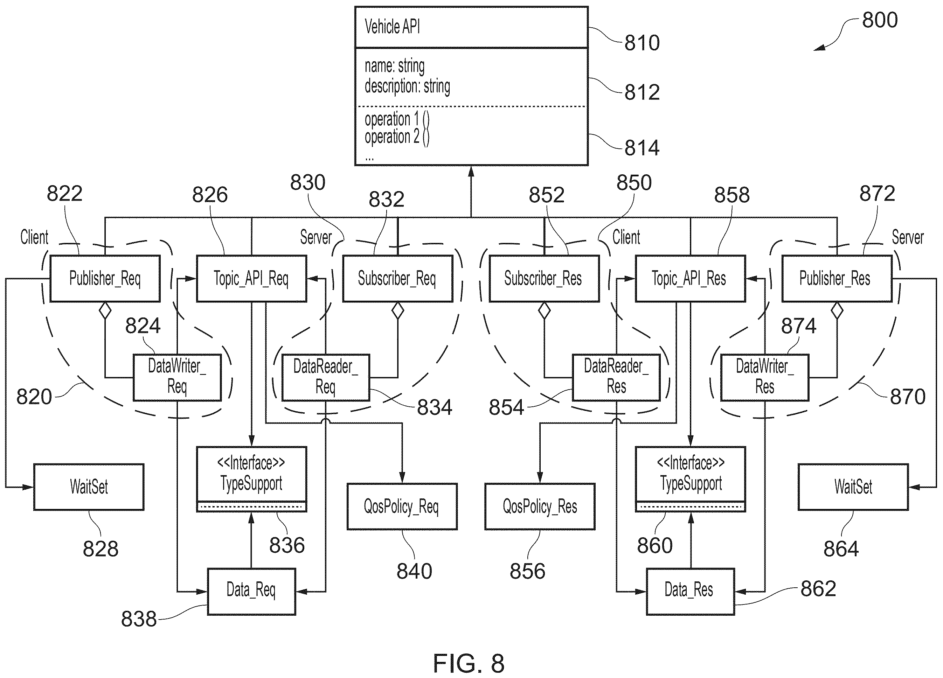

FIG. 8 illustrates one example data flow 800 for designing a vehicle API-DDS transformer to translate client-server (C-S) interface to DDS topics, according to some examples. In order to translate vehicle APIs to DDS topics and achieve the proper request/response SOA communication, some examples described herein design two topics for each API to perform a request/response session with a consideration of reducing unnecessary communication loading. In FIG. 8, the vehicle API 810 points to DomainEntity (class), with attributes 812 and operations 814 identified, as defined in the OMG Data Distribution Service (DDS) standards document.

In the Topic-Definition circuit, each API (with only one API 810 shown for simplicity purposes only) has a corresponding topic attribute including its name, two publishers/subscribers, two DataWriters/DataReaders, and a quality of service (QoS) policy. Thus, as illustrated in FIG. 8, vehicle application programming interface (API) 810 has a Topic_API_Req 826 (as per DDS standards document) for the client requesting a service from a server and a Topic_API_Res 858 (again, as per DDS standards document) for the client receiving the response from a server. Each topic has one Publisher and one Subscriber. Each Publisher/Subscriber has one DataWriter/DataReader.

Thus, in this example, Topic_API_Req 826 includes a Publisher_req 822 and a Subscriber_Req 832, with at 820 a DataWriter_Req 824 providing data flow to Publisher_req 822, Topic_API_Req 826 (again, as per DDS standards document) and Data_Req function 838. Similarly, in this example, Topic_API_Req 826 includes a Subscriber_Req 832 (again, as per DDS standards document), with at 830 a DataReader_Req 834 providing data flow to Subscriber_req 832, Topic_API_Req 826 and Data_Req function 838. The Topic_API_Req 826 and Data_Req function 838 provide data flow to a first TypeSupport interface 836.

Thus, FIG. 8 illustrates that each vehicle API 810 has two topics that are responsible for 'request' and 'response' respectively, with other illustrated information substantially as referenced in the DDS standards document.

Furthermore, in this example, Topic_API_Res 858 includes a Publisher_Res 872 and a Subscriber_Res 852, with at 870 a DataWriter_Res 874 providing data flow to Publisher_Res 872, Topic_API_Res 858 and Data_Res function 862. Similarly, in this example, Topic_API_Res 858 includes a Subscriber_Res 852, with at 850 a DataReader_Res 854 providing data flow to Subscriber_Res 852, Topic_API_Res 858 and Data_Res function 862. The Topic_API_Res 858 and Data_Res function 862 provide data flow to a second TypeSupport interface 860.

In this example, in order to make each request/response session reliable, a max_wait parameter was set in a WaitSet 828, 864, respectively connected to Publisher_req 822 and Publisher_Res 872. Each request either succeeds or is timed out.

In this example, vehicle API 810 itself has no priorities, but the runnable that calls the vehicle API 810 does have priorities. This priority should have corresponding QoS policies (such as TRANSPORT_PRIORITY). In some examples, according to different scenarios, the DataReader_Req 834 for the Subscriber_Req 832 is responsible for receiving a valid returned status of the request or requested data.

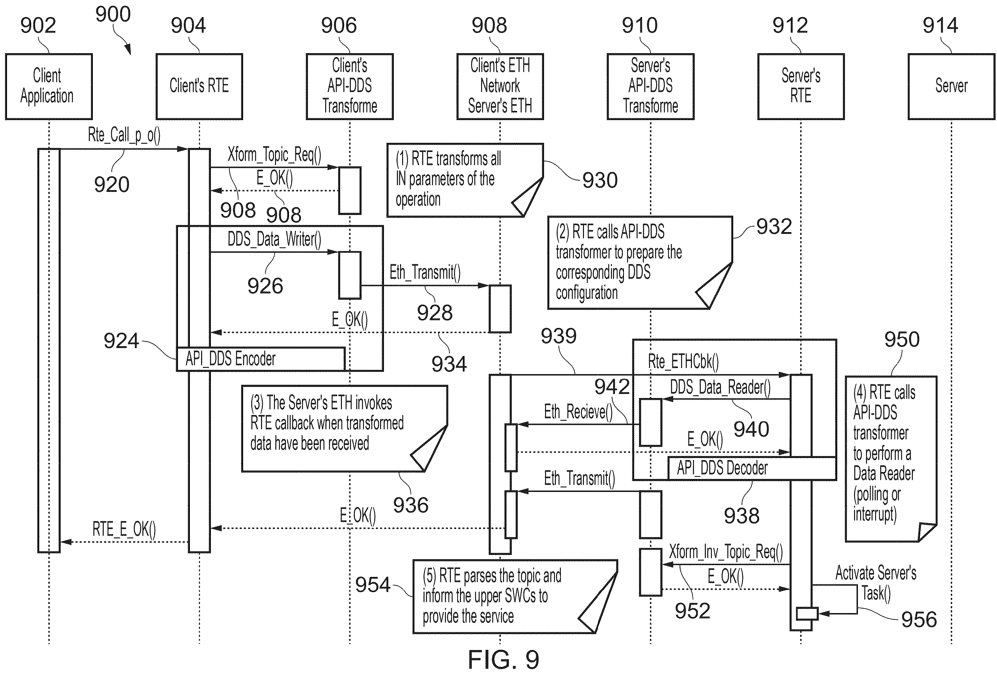

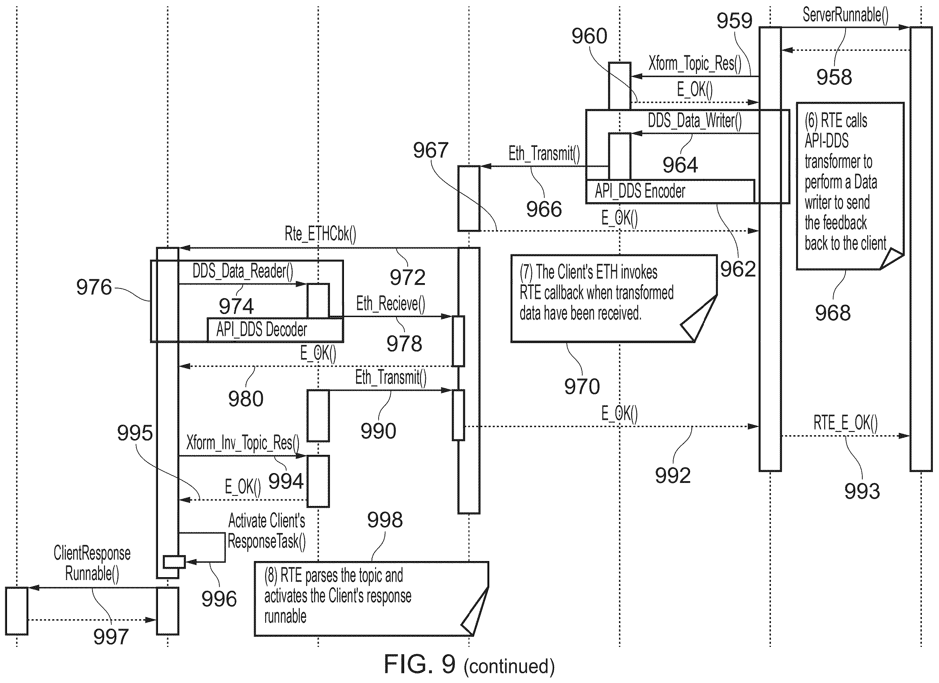

Referring now to FIG. 9, one example of a message sequence chart (MSC) 900 for designing a vehicle API-DDS transformer to translate C-S interface to DDS topics, say related to FIG. 8, is illustrated according to some examples. Here, the vehicle API-DDS transformer is a software component arranged to perform the transformation/translation. Examples herein described create the sequences for the inter-ECU communication, which implements API-DDS transformations. The message sequence chart 900 includes communications between a client application 902, a client's Real Time Environment (RTE) 904, a Client's API-DDS transformation 906, an ethernet connection between the client and server 908, a Server's API-DDS transformation 910, a Server's Real Time Environment (RTE) 912 and a Server 914, The ethernet connection between the client and server 908 is at the bottom 'physical layer of transmissions where ethernet frames are present and communications (effectively) start and stop. From a software sequence perspective, the ethernet transmission is the last chain of the client's transmission and the first chain of the server's reception.

The message sequence chart (MSC) 900 includes a plethora of concepts and communications that are specified in the AutoSAR_SWS_RTE spec., which will not be repeated here for simplicity purposes only, as a skilled artisan will readily understand that some communications in the MSC 900 have minimal/no impact on the concepts described herein.

As the operation at 930 explains, the Client Application 902 executes RTE_Call_p_o() 920 with all input parameters. Here, the Client's RTE 904 will first request Client's API-DDS Transformer 906 to transform the vehicle API to related DDS topics, by calling Xform_Topic_Req() 922 with an E_OK response 923.

As the operation at 932 explains, in API_DDS Encoder 924, Client's RTE 904 will issue DDS_Data_Writer() 926 to publish the DDS topic. The Client's API-DDS Transformer 906 will then send the ethernet packets containing this DDS topic by calling (ethernet) Eth_Transmit() at 928 with an E_OK response 934.

As the operation at 936 explains, the Server's RTE 912 will be notified that ethernet frames have been received by Re_ETH_Cbk at 940. As the operation at 950 explains, in API_DDS_Decoder 938, the Server's RTE 912 will interpret the DDS data by calling DDS_Data_Reader() at 940 and the Server's API-DDS Transformer calling Eth_Recieve() 942 with an E_OK() response.

As the operation at 954 explains, the Server's RTE 912 calls Xform_Inv_Topic_Req() 952 to request Server's API-DDS Transformer 910 to transform the DDS topic back to the vehicle API. Then the Server's RTE 912 will activate its tasks at 956 as per the vehicle API. The ServerRunnable() will then be triggered at 958 on the server side.

Hereafter, the remaining sequences of MSC 900 are predominantly repeated, but in an opposite direction from the server 914 to the client 902.

As the operation at 968 explains, once the server 914 has finished with the request, it transmits back the data by calling Xform_Topic_Res() at 959 with an E_OK response 960.

As the operation at 968 explains, in API_DDS Decoder 962, Server's RTE 912 will issue DDS_Data_Writer() 964 to publish the DDS topic. The Server's API-DDS Transformer 910 will then send the ethernet packets containing this DDS topic by calling Eth_Transmit() at 966 with an E_OK response 967.

As the operation at 970 explains, the Server's RTE 912 will be notified that ethernet frames have been received by RTE_ETH_Cbk at 972. In API_DDS_Decoder 976, the Client's RTE 904 will interpret the DDS data by calling DDS_Data_Reader() at 974 and the Client's API-DDS Transformer 906 calling Eth_Recieve() 978 with an E_OK() response 980.

The Client's RTE 904 calls Xform_Inv_Topic_Res() 994 to request Client's API-DDS Transformer 906 to transform the DDS topic back to the vehicle API. Then the Client's RTE 904 will activate its tasks at 996 as per the vehicle API. As the operation at 998 explains, the Client RTE 904 parses the topic and activates the ClientRunnable() at 997 on the client side.

Thus, examples herein described provide a method for implementing software defined vehicle (SDV) application programming interfaces (APIs) using an automotive open system architecture (AUTOSAR) classic platform (CP). This is in contrast to the approach proposed in CN114691234A that describes an approach to use AutoSAR CP from the top layer (SWC) to the bottom layer (i.e., the MicroController Abstract Layer (MCAL)) that is only able to be applied to traditional MCU nodes and is incompatible with a context of SDV that focuses on a service-based architecture. The example approach is also in contrast to the approach adopted in KR2009/0056071A, which is focused on the service abstraction layer within the AutoSAR CP BSW to communicate with external servers via this abstraction layer. Such an approach differs from the examples described herein that use C-S interfaces: to achieve inter-ECU service-based communication in the context of a SDV vehicle API, and are adapted to interact with other SWCs and not interact with BSW service abstraction layers.

In the foregoing specification, examples have been described with reference to specific examples of embodiments. It will, however, be evident that various modifications and changes may be made therein without departing from the scope as set forth in the appended claims and that the claims are not limited to the specific examples described above.

The connections as discussed herein may be any type of connection suitable to transfer signals from or to the respective nodes, units or devices, for example via intermediate devices. Accordingly, unless implied or stated otherwise, the connections may for example be direct connections or indirect connections. The connections may be illustrated or described in reference to being a single connection, a plurality of connections, unidirectional connections, or bidirectional connections. However, different embodiments may vary the implementation of the connections. For example, separate unidirectional connections may be used rather than bidirectional connections and vice versa. Also, plurality of connections may be replaced with a single connection that transfers multiple signals serially or in a time multiplexed manner. Likewise, single connections carrying multiple signals may be separated out into various different connections carrying subsets of these signals. Therefore, many options exist for transferring signals. Those skilled in the art will recognize that the architectures depicted herein are merely exemplary, and that in fact many other architectures can be implemented which achieve the same functionality.

Any arrangement of components to achieve the same functionality is effectively 'associated' such that the desired functionality is achieved. Hence, any two components herein combined to achieve a particular functionality can be seen as 'associated with' each other such that the desired functionality is achieved, irrespective of architectures or intermediary components. Likewise, any two components so associated can also be viewed as being 'operably connected,' or 'operably coupled,' to each other to achieve the desired functionality.

Furthermore, those skilled in the art will recognize that boundaries between the above-described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments. Also for example, in one embodiment, the illustrated examples may be implemented as circuitry located on a single integrated circuit or within a same device.

In some examples, the various components within the SWCs can be realized in discrete or integrated component form, with an ultimate structure therefore being an application-specific or design selection. As the illustrated embodiments may, for the most part, be implemented using electronic components and circuits known to those skilled in the art, details will not be explained in any greater extent than that considered necessary as illustrated below, for the understanding and appreciation of the underlying concepts of the herein described and in order not to obfuscate or distract from the teachings of the herein described.

Also, the examples, or portions thereof, may be implemented as soft or code representations of physical circuitry or of logical representations convertible into physical circuitry, such as in a hardware description language of any appropriate type. Also, the examples herein described are not limited to physical devices or units implemented in non-programmable hardware but can also be applied in programmable devices or units able to perform the desired sampling error and compensation by operating in accordance with suitable program code, such as minicomputers, personal computers, notepads, personal digital assistants, electronic games, automotive and other embedded systems, cell phones and various other wireless devices, commonly denoted in this application as 'computer systems'. However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms 'a' or 'an,' as used herein, are defined as one or more than one. Also, the use of introductory phrases such as 'at least one' and 'one or more' in the claims should not be construed to imply that the introduction of another claim element by the indefinite articles 'a' or 'an' limits any particular claim containing such introduced claim element to inventions containing only one such element, even when the same claim includes the introductory phrases 'one or more' or 'at least one' and indefinite articles such as 'a' or 'an.' The same holds true for the use of definite articles. Unless stated otherwise, terms such as 'first' and 'second' are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

## Claims

1. A method for implementing software defined vehicle, SDV, application programming interfaces, APIs, using an automotive open system architecture, AUTOSAR, classic platform, CP, the method comprising:
distributing SDV APIs on at least one client-server, C-S, interface located between:
a SDV sensor software component, SWC,
a SDV central compute unit, CCU, SWC, and
a SDV actuator SWC;
developing an API-Data Distribution Service, DDS, transformer; and
mapping, by the API-DDS transformer, the at least one C-S interface to DDS topics.

2. The method of Claim 1 further comprising:
designing vehicle APIs for the SDV sensor SWC; and
identifying and activating runnables for the SDV sensor SWC.

3. The method of Claim 1 or 2 further comprising:
designing vehicle APIs for the SDV CCU SWC; and
identifying and activating runnables for the SDV CCU SWC.

4. The method of any preceding Claim further comprising:
designing vehicle APIs for the SDV actuator SWC; and
identifying and activating runnables for the SDV actuator SWC.

5. The method of any preceding Claim further comprising at least one of:
mapping SWCs to the SDV CCU;
mapping SWCs to Zone Control Modules, ZCMs.

6. The method of any preceding Claim further comprising configuring a basic software, BSW, component to integrate APIs, real-time environment, RTE, DDS, operating system, OS, and MicroController Abstract Layer, MCAL.

7. The method of any preceding Claim, further comprising generating and building software codes for at least one of: the SDV sensor SWC, and the SDV CCU SWC.

8. The method of any preceding Claim, further comprising generating and building software codes for the SDV actuator SWC

9. The method of any preceding Claim, wherein developing an API-DDS transformer and mapping the at least one C-S interface to DDS topics further comprises:
transforming, at a Client's real-time environment, RTE, input parameters of an operation; and
calling, at the Client's RTE, the API-DDS transformer to prepare a corresponding DDS configuration.

10. The method of any preceding Claim, wherein developing an API-DDS transformer and mapping the at least one C-S interface to DDS topics further comprises invoking a real-time environment, RTE, callback at a server side of an ethernet connection between the client and server when transformed data has been received at the server side.

11. The method of any preceding Claim, wherein developing an API-DDS transformer and mapping the at least one C-S interface to DDS topics further comprises calling, at a Server's real-time environment, RTE, a Server's API-DDS transformer to perform a Data Reader polling or interrupt operation.

12. The method of any preceding Claim, wherein developing an API-DDS transformer and mapping the at least one C-S interface to DDS topics further comprises parsing, by a Server's real-time environment, RTE, at least one topic and informing upper layer SWCs to provide the service.

13. The method of any preceding Claim, wherein developing an API-DDS transformer and mapping the at least one C-S interface to DDS topics further comprises calling, by a Server's real-time environment, RTE, the Server's API-DDS transformer to perform a 'DDS Data' writer and sending feedback to the client.

14. The method of any preceding Claim, wherein developing an API-DDS transformer and mapping the at least one C-S interface to DDS topics further comprises invoking, by the client via an ethernet connection between the client and server, a real-time environment, RTE, callback in response to transformed data having been received.

15. The method of any preceding Claim, wherein developing an API-DDS transformer and mapping the at least one C-S interface to DDS topics further comprises parsing by a client's real-time environment, RTE, the at least one C-S interface to DDS topics.
